# EUROPEAN PATENT SPECIFICATION

(11) **EP 1 118 592 B1**
(45) Date of publication and mention of the grant of the patent: **21.04.2004**
(21) Application number: 00128531.1
(22) Date of filing: 27.12.2000
(51) Int. Cl.: C03B 33/07, C03B 33/04

(54) **Unit for notching a sheet of laminated glass**
Vorrichtung zum Kerben von Verbundglasscheiben
Appareil pour inciser des feuilles de verre laminées

(30) Priority: 14.01.2000 IT TO200036
(43) Date of publication of application: 25.07.2001
(73) Proprietor: BOTTERO S.p.A., 12010 Cuneo (IT)
(72) Inventor: Mattio, Roberto, 12026 Piasco (IT); Aimar, Giacomo, 12010 Cervasca (IT)
(74) Representative: Eccetto, Mauro

(56) References cited:
- AT-B- 382 360
- DE-U- 9 313 591
- DE-U- 29 608 724

## Description

The present invention relates to a unit for notching a sheet of laminated glass.

As is known, sheets of laminated glass are notched on units comprising a supporting surface for the sheet to be notched, and two notching heads located above and below the supporting surface and each fitted to a respective straight guide on which to travel in opposite directions along a straight notching path. On the supporting surface, the sheets are moved in a direction perpendicular to said directions by means of powered belts or straightforward air cushions - which are prevented, however, from being used on such units on account of the opening in the supporting surface for passage of the bottom notching head tool - and are also rotated 90° by means of gripping heads fitted to, and rotating about an axis perpendicular to, the supporting surface (DE-U-29608724).

At each forward feed movement of the sheet, the notching heads form a number of parallel or perpendicular notch lines, along which the sheet is subsequently broken up onto a number of parallel-sided articles.

Though widely used for producing rectangular or square glass articles, known units of the above type are particularly unsuitable for notching oblique or curved lines and, consequently, for producing articles not only with nonparallel sides but, above all, of exactly the same shape and size.

It is an object of the present invention to provide a unit for notching sheets of laminated glass, designed to provide a straightforward, low-cost solution to the aforementioned drawback.

According to the present invention, there is provided a unit for notching a sheet of laminated glass, comprising a supporting surface for the sheet of laminated glass to be notched; two notching heads running along respective straight paths parallel to said supporting surface so as to effect two notch lines on opposite surfaces of said sheet of laminated glass; and handling means for moving said sheet of laminated glass on said supporting surface; said handling means comprising a gripping head for gripping said sheet and having a respective barycentric axis perpendicular to the supporting surface, and first actuating means for rotating said gripping head with respect to said supporting surface about said barycentric axis; characterized in that said handling means also comprise second actuating means for moving the gripping head with respect to said supporting surface in a first direction perpendicular to the barycentric axis.

A non-limiting embodiment of the invention will be described by way of example with reference to the accompanying drawings, in which:
Figure 1 shows a schematic plan view of a preferred embodiment of the notching unit according to the present invention;
Figure 2 shows a smaller-scale section, with parts removed for clarity, along line II-II in Figure 1;
Figure 3 shows the same view as in Figure 2, with parts of Figure 2 in a different operating position;
Figure 4 shows an enlarged view in perspective of a detail in Figures 1 to 3;
Figure 5 shows a section of a variation of a detail in Figure 3;
Figures 6 to 9 show smaller-scale views of parts of Figure 1 in four different operating positions;
Figure 10 shows a section, with parts removed for clarity, along line X-X in Figure 1.

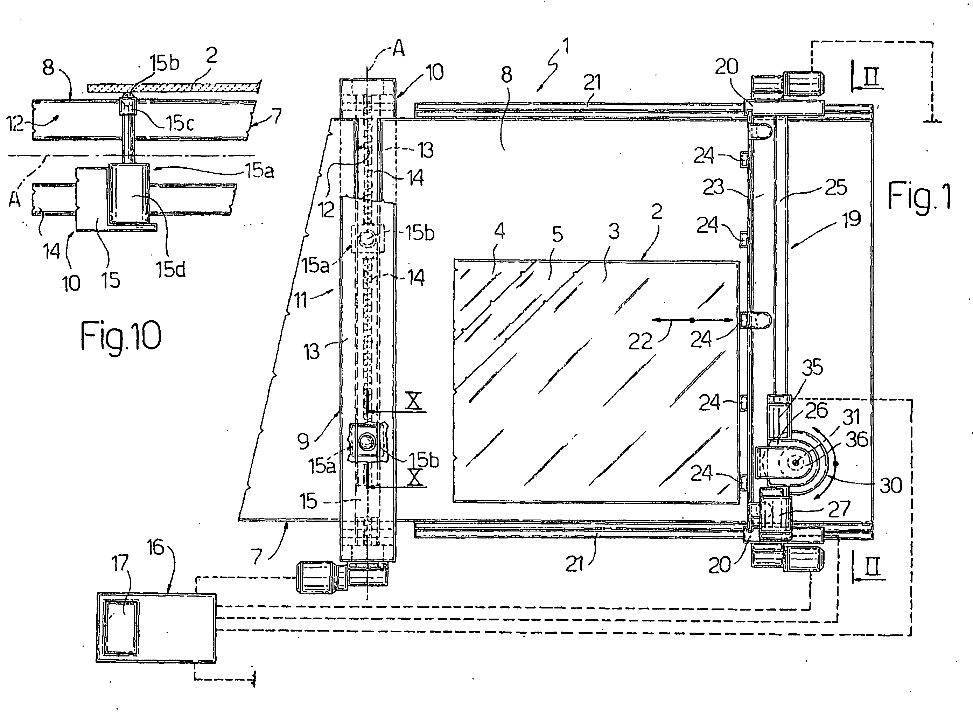

Number 1 in Figures 1 to 3 indicates as a whole a unit for notching a sheet 2 of laminated, so-called multilayered, glass comprising two sheets 3 and 4 of glass separated by a layer 5 of thermoplastic material.

Unit 1 comprises a table 7 defining a supporting surface 8 for sheet 2 and supporting a top notching bridge 9 and a bottom notching bridge 10, which are located one over the other at a notching station 11 and facing a straight opening 12 formed through supporting surface 8 in a direction A. Bridges 9 and 10 comprise respective cross members 13 facing each other and fitted integrally with respective straight guides 14 parallel to each other and lying in the same plane perpendicular to the supporting surface. A respective powered slide 15 (Figure 1) is fitted in axially-sliding manner to each guide 14, and supports a respective known notching tool (not shown) designed to travel in direction A to form a notch line in the relative sheet 3, 4 of glass. With reference to Figure 1, and particularly to Figure 10, slide 15 of bridge 10 also carries a supporting device 15a for supporting sheet 2, and which, in the example described, comprises a spherical body 15b housed for rotation inside a spherical seat on an end portion 15c of the output rod of a pneumatic linear actuator 15d. Portion 15c is narrower than opening 12 and is movable by actuator 15d between a raised work position shown in Figure 10 and in which it engages opening 12 and body 15b contacts sheet 2 to support the sheet detached from supporting surface 8, and a rest position in which body 15b extends completely beneath supporting surface 8.

Slides 15 and device 15a are controlled by a known central control unit 16 comprising a memory block 17 for storing the lines to be notched in sheet 2.

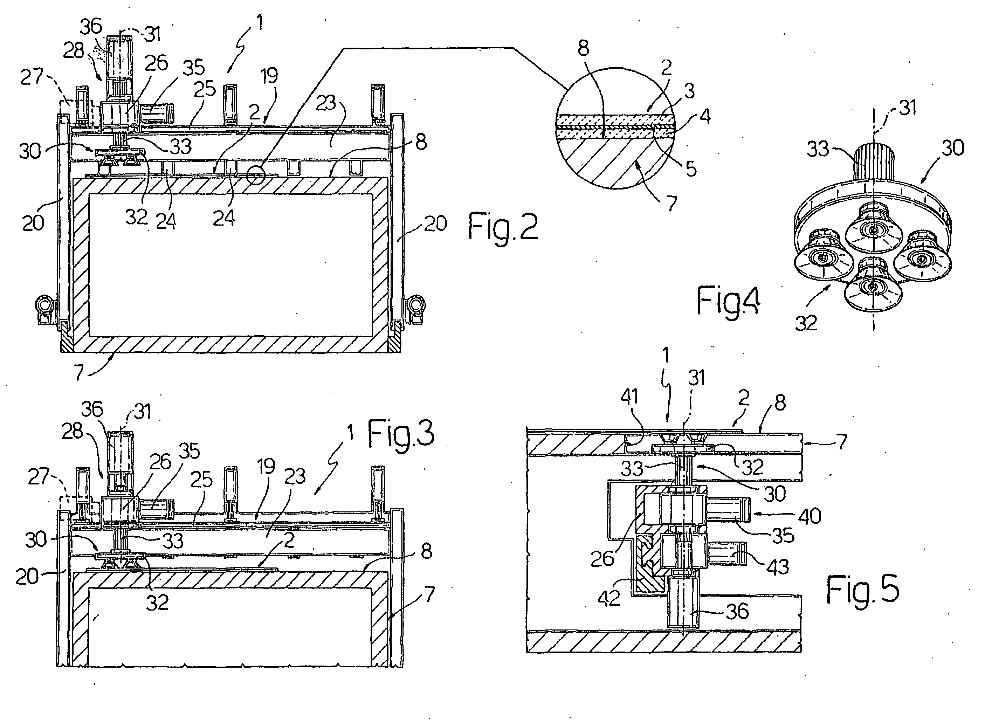

With reference to Figure 1, table 7 also supports a powered locating bridge 19 extending over supporting surface 8 and comprising two uprights 20 connected to respective guides 21, in turn connected integrally to table 7, so as to slide back and forth, parallel to supporting surface 8, in a direction 22 perpendicular to guides 14 and under the control of central control unit 16. Bridge 19 comprises a cross member 23 parallel to and detached from supporting surface 8, and which supports a number of appendixes 24 extending towards surface 8 and movable, by means of respective known pneumatic actuators not described in detail, to and from a lowered position (Figure 2) in which they define respective locators for locating and maintaining sheet 2 in a reference position. Cross member 23 is also fitted integrally with a straight guide 25 perpendicular to direction 22 and parallel to surface 8, and which in turn is fitted with a slide 26 which is moved axially along guide 25 by a respective motor 27 controlled by central control unit 16. Slide 26, guide 25, locating bridge 19 and supporting device 15a form part of an assembly 28 for handling sheet 2, and which also comprises a gripping and handling member 30 (Figures 2, 3, 4) fitted to slide 26, having a respective axis of symmetry 31 perpendicular to supporting surface 8, and in turn comprising a suction-cup-type gripping head 32 for gripping sheet 2, and a shank 33. Shank 33 is connected to slide 26 so as to rotate about axis 31, by virtue of a known, e.g. worm-helical gear, transmission (not shown) activated by an electric motor 35 connected to central control unit 16, and so as to translate in opposite directions along axis 31 to and from supporting surface 8 by virtue of a known pneumatic actuator 36 not described in detail (Figures 2 and 3).

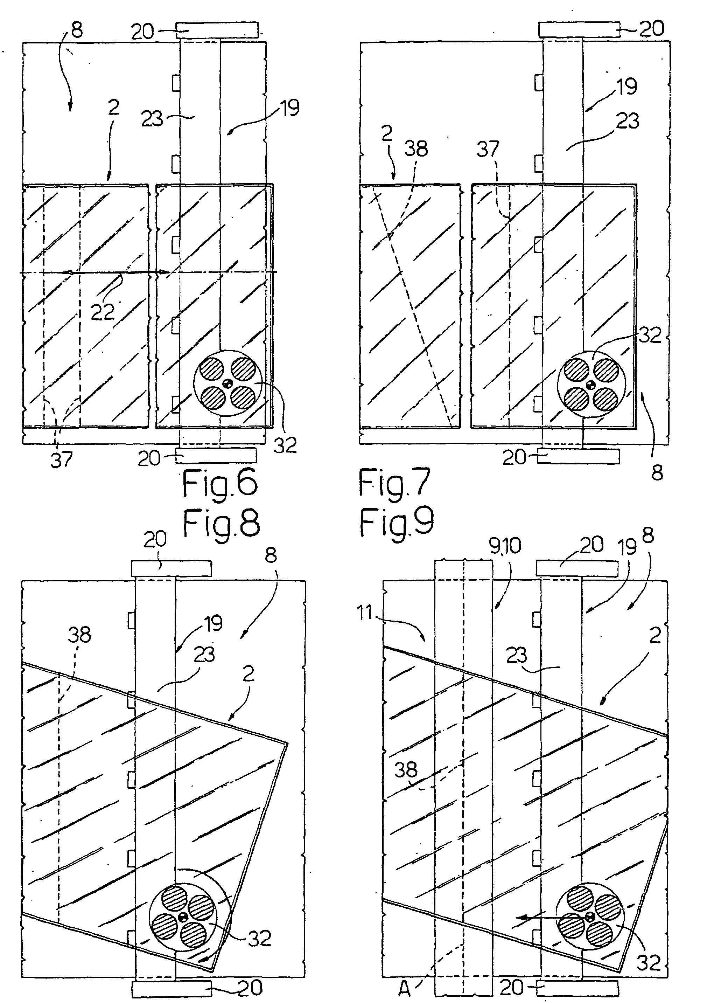

In actual use, to form on sheet 2 a number of straight, parallel notch lines 37, as shown in Figure 6, gripping head 32 engaging sheet 2 is maintained in a fixed position with respect to locating bridge 19; and, following the work stroke of the notching tools in direction A, bridge 19 is moved in steps in direction 22, possibly after first lifting head 32 by means of actuator 36 to reduce drag on sheet 2.

To form a straight notch line 38 sloping with respect to lines 37, as shown in Figure 7, head 32 engaging sheet 2 is raised and, at the same time, actuator 15d is activated to move portion 15c into the raised work position to detach sheet 2 from supporting surface 8. At this point, by rotating head 32 about axis 31 and moving bottom slide 15 along respective guide 14 so that body 15b is maintained constantly engaging sheet 2, line 38 is positioned parallel to direction A, as shown in Figure 8; and locating bridge 19 is then moved in direction 22 so that line 38 coincides with direction A, as shown in Figure 9. At this point, portion 15c is restored to the lowered position, head 32 is moved towards supporting surface 8, and slides 15 are moved along guides 14 to notch both sheets 3 and 4 of glass defining sheet 2.

If the notch lines to be formed in sheets 3 and 4 of glass comprise at least one curved portion, this is achieved by combining rotation of head 32 about axis 31 and translation of locating bridge 19 and of slides 15 and 26 along respective guides 14 and 25.

In the Figure 5 variation, unit 1 comprises a sheet 2 handling assembly 40 extending beneath supporting surface 8, and which differs from assembly 28 by head 32 engaging a through opening 41 formed through the portion of table 7 defining supporting surface 8. In the example shown, assembly 40 also differs from assembly 28 by slide 26 - to which shank 33 of member 30 is connected to rotate about and slide axially along axis 31 - being connected to a fixed guide 42, connected integrally to table 7, so as to only slide in direction 22 by virtue of a respective motor 43.

In a variation not shown, guide 42 is fitted to a further slide connected to table 7 so as to slide in a direction perpendicular to direction 22.

Using a head 32 rotated about a respective axis 31 and moved in one or more directions by a central control unit 16 therefore provides for forming in sheet 2, not only the usual parallel or perpendicular notch lines 37, but also any notch line 38 sloping with respect to lines 37, and, above all, notch lines having curved portions of any sort. Moreover, memorizing the geometry of the notch lines in central control unit 16 provides for obtaining, when sheet 2 is broken up along the notch lines, laminated glass articles which are not only extremely precise but also the same shape and size.

Using a straightforward gripping head and a powered handling assembly also meets increasing demand for a notching unit which is cheaper to produce and maintain, is more compact, and can therefore be operated either independently or as part of a mass production system, between a sheet supply unit and a notched sheet breakoff unit.

Finally, using a supporting device which is movable inside opening 12 provides for easily maneuvering sheets of any shape or size on the supporting surface, with no jamming or slippage on the supporting surface which might affect the position of the sheet, thus enabling the formation of articles of exactly the same shape and size and hence a high standard of quality of the finished product.

Clearly, changes may be made to unit 1 as described herein without, however, departing from the scope of the present invention. In particular, gripping and handling member 30 may be other than as described herein, and be activated by actuating assemblies other than those described by way of example. In particular, as opposed to being carried by locating bridge 19, gripping member 30 may be carried by a powered actuating member of its own associated with table 7.

Device 15a may be other than as described by way of example. In particular, pneumatic actuator 15d may be replaced with an angular actuator with a mechanical transmission of any type between the angular actuator and portion 15c, and body 15b may be replaced with one or more auxiliary supporting bodies.

Finally, notching bridges 9 and 10 may be connected to table 7 by an adjusting device for adjusting the position of the notching tools with respect to direction A and to opening 12 for the passage of the bottom notching tool.

## Claims

1. A unit (1) for notching a sheet (2) of laminated glass, comprising a supporting surface (8) for the sheet (2) of laminated glass to be notched; two notching heads (15) facing each other and running along respective straight paths (14) parallel to said supporting surface (8) so as to effect two notch lines (37; 38) on opposite surfaces of said sheet (2) of laminated glass; and handling means (28; 40) for moving said sheet (2) of laminated glass on said supporting surface (8); said handling means (28; 40) comprising a gripping head (32) for gripping said sheet (2) and having a respective barycentric axis (31) perpendicular to the supporting surface (8), and first actuating means (35) for rotating said gripping head (32) with respect to said supporting surface (8) about said barycentric axis (31); **characterized in that** said handling means (28; 40) also comprise second actuating means (19);(43) for moving the gripping head (32) with respect to said supporting surface in a first direction (22) perpendicular to the barycentric axis (31).

2. A unit as claimed in Claim 1, **characterized in that** said first direction (22) is perpendicular to said straight paths (14).

3. A unit as claimed in Claim 1 or 2, **characterized by** also comprising third actuating means (27) for moving said gripping head (32) in a second direction (25) perpendicular to said first direction (22).

4. A unit as claimed in Claim 3, **characterized in that** said second direction (25) extends parallel to said supporting surface (8).

5. A unit as claimed in any one of the foregoing Claims, **characterized in that** said gripping head (32) is located entirely over said supporting surface to engage a top surface of the sheet (2) on the supporting surface (8).

6. A unit as claimed in Claim 5, **characterized by** comprising a locating bridge (19) extending over said supporting surface (8) to position said sheet (2) on the supporting surface (8) in a reference position; said locating bridge (19) carrying said gripping head (32) and being movable in said first direction (22).

7. A unit as claimed in Claim 6, **characterized in that** said locating bridge (19) comprises a respective straight guide (25) perpendicular to said first direction (22); and a powered slide (26) connected in axially-sliding manner to the guide (25) of the locating bridge (19); said gripping head (32) being carried by said powered slide (26).

8. A unit as claimed in any one of the foregoing Claims 1-4, **characterized in that** said gripping head (32) and at least said first (35) and second (43) actuating means are located beneath said supporting surface (8) to engage a bottom surface of the sheet (2) on the supporting surface (8).

9. A unit as claimed in any one of the foregoing Claims, **characterized by** comprising further actuating means (36) for moving said gripping head (32) to and from said supporting surface (8).

10. A unit as claimed in any one of the foregoing Claims, **characterized in that** said handling means also comprise supporting means (15b) for supporting said sheet (2) and is movable with respect to said supporting surface (8); powered fourth actuating means (15) being provided to move said supporting means (15b) with respect to said supporting surface (8) in a direction parallel to said straight paths (14).

11. A unit as claimed in Claim 10, **characterized by** comprising fifth actuating means (15d) for moving said supporting means (15b) to and from said supporting surface (8).

12. A unit as claimed in Claim 10 or 11,
**characterized in that** said supporting surface comprises an opening (12); and **in that** said supporting means (15b) are movable through said opening (12).

## Patentansprüche

1. Einheit (1) zum Einkerben einer Scheibe (2) aus laminiertem Glas, mit einer Abstützfläche (8) für die Scheibe (2) aus laminiertem Glas, die eingekerbt werden soll, zwei Kerbköpfen (15), die einander gegenüber liegen und die entlang jeweiliger gerader Bahnen (14) parallel zu der Abstützfläche (8) laufen, um zwei Kerblinien (37, 38) auf entgegengesetzten Seiten der Scheibe (2) aus laminiertem Glas zu erzeugen, und Handhabungsmitteln (28, 40) zum Bewegen der Scheibe (2) aus laminiertem Glas auf der Abstützfläche (8), wobei die Handhabungsmittel (28, 40) einen Greifkopf (32), der zum Greifen der Scheibe (2) vorgesehen ist und der eine zugehörige im Schwerpunkt liegende Achse (31) senkrecht zur Abstützfläche (8) hat, und erste Betätigungsmittel (35) zum Drehen des Greifkopfs (32) relativ zur Abstützfläche (8) um die Schwerpunktsachse (31) aufweisen, **dadurch gekennzeichnet, dass** die Handhabungsmittel (28, 40) auch zweite Betätigungsmittel (19, 43) aufweisen zum Bewegen des Greifkopfs (32) relativ zur Abstützfläche (8) in einer ersten Richtung (22) senkrecht zu der Schwerpunktsachse (31).

2. Einheit nach Anspruch 1, **dadurch gekennzeichnet, dass** die erste Richtung (22) senkrecht zu den geraden Bahnen (14) ist.

3. Einheit nach Anspruch 1 oder 2, **dadurch gekennzeichnet, dass** sie auch dritte Betätigungsmittel (27) aufweist zum Bewegen des Greifkopfs (32) in einer zweiten Richtung (25) senkrecht zu der ersten Richtung (22).

4. Einheit nach Anspruch 3, **dadurch gekennzeichnet, dass** die zweite Richtung (25) sich parallel zu der Abstützfläche (8) erstreckt.

5. Einheit nach einem der Ansprüche 1 bis 4, **dadurch gekennzeichnet, dass** der Greifkopf (32) vollständig über der Abstützfläche angeordnet ist, um die obere Fläche der Scheibe (2) zu greifen, die auf der Abstützfläche (8) liegt.

6. Einheit nach Anspruch 5, **dadurch gekennzeichnet, dass** sich eine Anordnungsbrücke (19) über der Abstützfläche (8) erstreckt, um die Scheibe (2) auf der Abstützfläche in einer Referenzposition zu positionieren, wobei die Anordnungsbrücke (19) den Greifkopf (32) trägt und in der ersten Richtung (22) bewegbar ist.

7. Einheit nach Anspruch 6, **dadurch gekennzeichnet, dass** die Anordnungsbrücke (19) eine zugehörige gerade Führung (25) senkrecht zur ersten Richtung (22) hat und einen angetriebenen Schlitten (26) hat, der gleitend in axialer Richtung mit der Führung (25) der Anordnungsbrücke (19) verbunden ist, wobei der Greifkopf (32) von dem angetriebenen Schlitten (26) getragen wird.

8. Einheit nach einem der Ansprüche 1 bis 4, **dadurch gekennzeichnet, dass** der Greifkopf (32) und zumindest die ersten und die zweiten Betätigungsmittel (35, 43) unterhalb der Abstützfläche (8) angeordnet sind, um die untere Fläche der Scheibe (2) zu greifen, die auf der Abstützfläche (8) liegt.

9. Einheit nach einem der Ansprüche 1 bis 8, **dadurch gekennzeichnet, dass** sie ferner Betätigungsmittel (36) zum Bewegen des Greifkopfs (32) hin zu und weg von der Abstützfläche (8) aufweist.

10. Einheit nach einem der Ansprüche 1 bis 9, **dadurch gekennzeichnet, dass** die Handhabungsmittel (28, 40) auch Abstützmittel (15b) haben, die zum Abstützen der Scheibe (2) vorgesehen sind und die relativ zur Abstützfläche (8) bewegbar sind, wobei angetriebene, vierte Betätigungsmittel (15) vorgesehen sind, um die Abstützmittel (15b) relativ zur Abstützfläche (8) in die Richtung zu bewegen, die parallel zu den geraden Bahnen (14) ist.

11. Einheit nach Anspruch 10, **dadurch gekennzeichnet, dass** sie fünfte Betätigungsmittel (15d) aufweist zum Bewegen der Abstützmittel (15b) hin zu und weg von der Abstützfläche (8).

12. Einheit nach Anspruch 10 oder 11, **dadurch gekennzeichnet, dass** die Abstützfläche (8) eine Öffnung (12) aufweist und dass die Abstützmittel (15b) durch die Öffnung (12) bewegbar sind.

## Revendications

1. Unité (1) pour entailler une feuille (2) de verre laminé, comprenant une surface de support (8) pour la feuille (2) de verre laminé à entailler; deux têtes d'entaillage (15) se faisant face et se déplaçant le long de trajectoires rectilignes (14) respectives parallèles à ladite surface de support (8) afin d'effectuer deux lignes d'entaille (37; 38) sur des surfaces opposées de ladite feuille (2) de verre laminé; et des moyens de manipulation (28; 40) pour déplacer ladite feuille (2) de verre laminé sur ladite surface de support (8); lesdits moyens de manipulation (28; 40) comprenant une tête de préhension (32) pour saisir ladite feuille (2) et ayant un axe barycentrique (31) respectif perpendiculaire à la surface de support (8), et des premiers moyens de commande (35) pour faire tourner ladite tête de préhension (32) par rapport à ladite surface de support (8) autour dudit axe barycentrique (31), **caractérisée en ce que** lesdits moyens de manipulation (28; 40) comprennent aussi des deuxièmes moyens de commande (19); (43) pour déplacer la tête de préhension (32) par rapport à ladite surface de support dans une première direction (22) perpendiculaire à l'axe barycentrique (31).

2. Unité telle que revendiquée dans la revendication 1, **caractérisée en ce que** ladite première direction (22) est perpendiculaire auxdites trajectoires rectilignes (14).

3. Unité telle que revendiquée dans la revendication 1 ou 2, **caractérisée en ce qu'**elle comprend également des troisièmes moyens de commande (27) pour déplacer ladite tête de préhension (32) dans une seconde direction (25) perpendiculaire à ladite première direction (22).

4. Unité telle que revendiquée dans la revendication 3, **caractérisée en ce que** ladite seconde direction (25) est parallèle à ladite surface de support (8).

5. Unité telle que revendiquée dans l'une quelconque des revendications précédentes, **caractérisée en ce que** ladite tête de préhension (32) est située totalement au-dessus de ladite surface de support pour prendre une surface du dessus de la feuille (2) sur la surface de support (8).

6. Unité telle que revendiquée dans la revendication 5, **caractérisée par le fait qu'**elle comprend un pont de positionnement (19) s'étendant par-dessus ladite surface de support (8) pour positionner ladite feuille (2) sur la surface de support (8) dans une position de référence; ledit pont de positionnement (19) transportant ladite tête de préhension (32) et étant mobile dans ladite première direction (22).

7. Unité telle que revendiquée dans la revendication 6, **caractérisée en ce que** ledit pont de positionnement (19) comprend un guide droit (25) respectif perpendiculaire à ladite première direction (22); et une glissière entraînée (26) reliée d'une manière axialement coulissante au guide (25) du pont de positionnement (19); ladite tête de préhension (32) étant transportée par ladite glissière entraînée (26).

8. Unité telle que revendiquée dans l'une quelconque des revendications précédentes 1-4, **caractérisée en ce que** ladite tête de préhension (32) et au moins lesdits premiers (35) et deuxième (43) moyens de commande sont situés sous ladite surface de support (8) pour prendre une surface de dessous de la feuille (2) sur la surface de support (8).

9. Unité telle que revendiquée dans l'une quelconque des revendications précédentes, **caractérisée par le fait qu'**elle comprend en outre des moyens de commande (36) pour déplacer ladite tête de préhension (32) vers et de ladite surface de support (8).

10. Unité telle que revendiquée dans l'une quelconque des revendications précédentes, **caractérisée en ce que** lesdits moyens de manipulation comprennent aussi des moyens de support (15b) pour supporter ladite feuille (2) et sont mobiles par rapport à ladite surface de support (8); des quatrièmes moyens de commande (15) entraînés étant prévus pour déplacer lesdits moyens de support (15b) par rapport à ladite surface de support (8) dans une direction parallèle auxdites trajectoires rectilignes (14).

11. Unité telle que revendiquée dans la revendication 10, **caractérisée par le fait qu'**elle comprend des cinquièmes moyens de commande (15d) pour déplacer lesdits moyens de support (15b) vers et de ladite surface de support (8).

12. Unité telle que revendiquée dans la revendication 10 ou 11, **caractérisée en ce que** ladite surface de support comporte une ouverture (12); et **en ce que** lesdits moyens de support (15b) sont mobiles à travers ladite ouverture (12).
